# EUROPEAN PATENT SPECIFICATION

(11) **EP 1 284 109 B1**
(45) Date of publication and mention of the grant of the patent: **23.05.2007**
(21) Application number: 02255336.6
(22) Date of filing: 30.07.2002
(51) Int. Cl.: A43B 23/16

(54) **Toe cap made of long fiber-reinforced thermoplastic resin for safety shoe and method for the production thereof**
Zehenkappe aus langfaserverstärktem thermoplastischem Kunststoff für Sicherheitsschuhe und Verfahren zu dessen Herstellung
Embout de sécurité d'orteils en résine thermoplastique renforcé avec longues fibres pour chaussures de sécurité et procédé de fabrication

(30) Priority: 10.08.2001 JP 2001244232
(43) Date of publication of application: 19.02.2003
(73) Proprietor: YKK Corporation, Tokyo 101-0024 (JP)
(72) Inventor: Tanaka, Yoshiharu, Toyama-ken (JP); Hirota, Mitsuo, Toyama-ken (JP)
(74) Representative: Luckhurst, Anthony Henry William

(56) References cited:
- EP-A- 0 528 249
- EP-A- 1 033 231
- WO-A-01/00392
- PATENT ABSTRACTS OF JAPAN vol. 2000, no. 12, 3 January 2001 (2001-01-03) & JP 2000 254931 A (YKK CORP), 19 September 2000 (2000-09-19)

## Description

### BACKGROUND OF THE INVENTION

### 1. Field of the Invention:

This invention relates to a toe cap or boxtoe which is used in safety foot wear such as shoes and boots for structurally reinforcing the toe of a shoe and enhancing the safety thereof and a method for the production thereof.

### 2. Description of the Prior Art:

As for toe caps of safety shoes, the great importance has heretofore been attached to the strength of the uppers of the shoes for protection of the wearer's toes against accidental heavy impact. Accordingly, the toe caps made of steel have been heretofore accepted for actual use. The safety shoes which use toe caps made of steel, however, entail the problem of handicapping the wearer's mobility by an inevitable increase of weight of the safety shoes owing to the use of steel as the material for the toe caps. For that reason, recently, toe caps made of a thermoplastic resin reinforced with reinforcing fibers such as glass fibers have been developed for the sake of decreasing the weights of safety shoes.

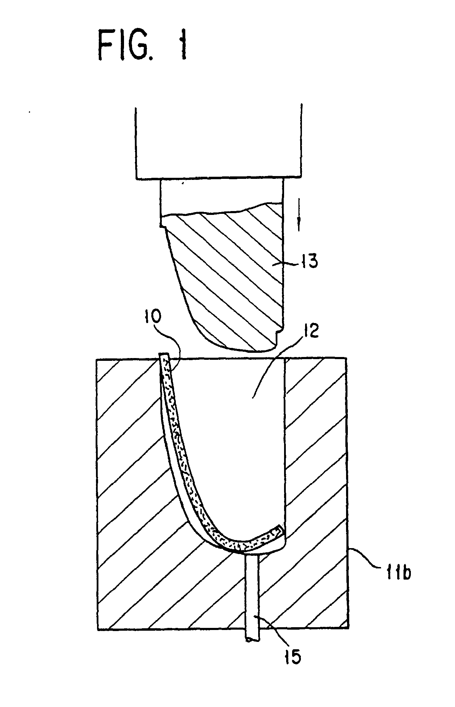

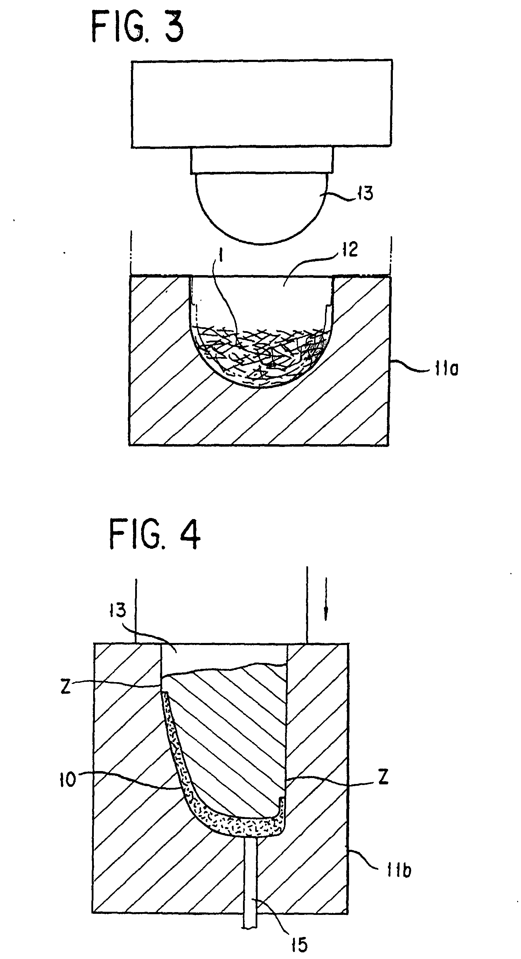

Heretofore, the toe caps made of a reinforcing fiber-containing thermoplastic resin for safety shoes are produced by the sheet forming technique from a sheet material of reinforcing fiber-containing thermoplastic resin. Specifically, the sheet material of the reinforcing fiber-containing thermoplastic resin is cut into a trapezoidal shape corresponding to the toe cap and weighed. At this time, it is difficult to cut the sheet material into a fixed weight. Accordingly, for the sake of adjusting the weight of the cut sheet, generally a sheet piece of a suitable shape is applied to a suitable position of the sheet material and the resultant sheet material is heated by a far-infrared furnace, for example, for melting and softening the material. This sheet material 10 in the softened state is placed in a cavity 12 of a forming mold or tooling 11b, as shown in Fig. 1, and compression molded under application of pressure and heat by lowering a core 13 from the upper part, as shown in Fig. 4. Thereafter, such fabrication as deflashing is performed to produce the toe cap for a safety shoe. Incidentally, reference mark 15 denotes an ejector.

When the sheet material is subjected to deep drawing by the sheet forming technique mentioned above, the sheet material has a portion elongated to a large extent. In the elongated portion, the reinforcing material is also elongated. This will cause such problems as the decrease of strength, particularly the relatively easy occurrence of cracks in the leading terminal central part of a skirt part, and further the following problems.
(1) Since the material is a sheet material comprising a resin and reinforcing fibers, the production cost becomes high.
(2) Since the material formed in the shape of sheet must be again plasticized by heat fusion, the material tends to suffer oxidization and heat deterioration.
(3) When the sheet is supplied to a forming mold after cutting and heat fusion, it must be forcedly bent to put in the mold. Accordingly, it is difficult to realize automation and rationalization.
(4) The yield of the material is lowered by the sheet cutting step. Further, the percentage of rejected products tends to increase due to the positioning misregister at the time of placing the sheet material in the forming mold after heat fusion.
(5) It is difficult to arbitrarily design the toe cap, particularly a curved portion, due to the difference in shape between a core (convex form) and a cavity (concave form) of the forming mold. The difficulty of manufacture of the mold and collection of digital data and the increase in processing steps boost the cost of production of the mold. Moreover, the occurrence of flash in a "Z" portion shown in Fig. 4 tends to grow.
(6) The use of a sheet piece for weight adjustment of the sheet material entails such problems as the occurrence of weld in a formed article and reduction or variation in strength of the toe caps.

WO 0100392 describes a method of making a toe cap for a shoe from fiber-reinforced thermoplastic resin by first forming a molten mass and subsequently pressing the molten mass to form the toe cap.

### SUMMARY OF THE INVENTION

An object of the present invention, therefore, is to provide a toe cap for a safety shoe which avoids such problems as mentioned above, enjoys light weight, exhibits uniform and high strength, and permits manufacture of a formed article incapable of suffering any variation in strength or any impairment of appearance.

Another object of the present invention is to provide a method which is capable of producing a high strength toe cap for a safety shoe with a high yield and lower variation in the strength and permitting obviation of a conventional sheet cutting step, easy adoption of automatic weighing, reduction in the percentage of rejected products due to the miss-charging of a material into a mold or misregister, and improvement in moldability.

To accomplish the objects described above, the present invention provides a toe cap made from a molten mass of a fiber-reinforced thermoplastic base material for a safety shoe, characterised in that it is formed from a pseudo-toe cap having a curved portion and which is primarily formed by the use of a fibrous pellet material of a long fiber-reinforced thermoplastic resin and that the proportion of the content of reinforcing fibers in a skirt part to that in a main body part is in the range of 70 to 100%.

In a preferred embodiment of the present invention, the toe cap has a wall thickness falling in the range of 2 to 6 mm. Incidentally, the thickness of the leading end of the toe cap is preferred to be in the range of 3.5 to 6 mm. Preferably, the reinforcing fiber is glass fiber and its content is in the range of 30 to 60% by volume in the main body part and 21 to 60% by volume in the skirt part. When the properties of the toe cap for a safety shoe to be produced are taken into consideration, it is more desirable that the proportion of the content of reinforcing fibers in the skirt part to that in the main body part be in the range of 80 to 100%.

The toe cap of the present invention as mentioned above is light and homogeneous and exhibits high strength.

The present invention further provides a method for the production of a toe cap for a safety shoe, which method is characterized by comprising placing a fibrous pellet material of a long fiber-reinforced thermoplastic resin in a pseudo-forming mold, compressing the fibrous pellet material therein under application of heat to primarily form a pseudo-toe cap having a curved portion setting the resultant pseudo-toe cap in position in a mold for forming a toe cap for a safety shoe, and applying pressure and heat to the pseudo-toe cap to compression mold the toe cap for a safety shoe.

In a preferred embodiment, the fibrous pellet material of long fiber-reinforced thermoplastic resin in the pseudo-forming mold is plasticized by application of heat with a heated air, a heater, etc. to prepare the pseudo-toe cap having a curved portion. More preferably, the primary forming of the pseudo-toe cap in the pseudo-forming mold is performed by application of pressure of 0.5 to 10 kg/cm² and a temperature of 190 to 270°C and the compression molding in the mold for forming a toe cap for a safety shoe is performed by application of pressure of 300 to 800 kg/cm² and a temperature of 70 to 160°C. It is preferable that the fibrous pellet material of long fiber-reinforced thermoplastic resin should have a diameter in the range of 0.2 to 5 mm and a length in the range of 7 to 55 mm. Preferably, the reinforcing fiber contained in the fibrous pellet material of long fiber-reinforced thermoplastic resin is glass fiber and its content is in the range of 30 to 60% by volume.

Since the method of the present invention uses the fibrous pellet material of long fiber-reinforced thermoplastic resin, it permits reduction of a material cost, obviation of a sheet cutting step employed in the conventional sheet forming technique, easy adoption of automatic weighing, and thus considerable improvement in the material efficiency. Further, since the pellet material weighed is charged into the pseudo-toe cap forming mold to primarily form the pseudo-toe cap and the resultant pseudo-toe cap which maintains its molten state is immediately subjected to compression forming in the forming mold, it is possible to reduce the percentage of rejected products due to the mis-charging of the material in the mold or misregister, to improve the moldability, and to lower the variation in strength.

### BRIEF DESCRIPTION OF THE DRAWINGS

Other objects, features, and advantages of the invention will become apparent from the following description taken together with the drawings, in which:
Fig. 1 is a fragmentary cross-sectional view schematically illustrating an example of a conventional step for forming a toe cap by using a molding sheet material, depicting a state before compression molding;
Fig. 2 is a perspective view schematically illustrating an example of a pseudo-toe cap to be used in the present invention;
Fig. 3 is a fragmentary cross-sectional view schematically illustrating an example of a step for forming the pseudo-toe cap of the present invention, depicting a state before compression molding;
Fig. 4 is a fragmentary cross-sectional view schematically illustrating an example of a step for forming the toe cap of the present invention at the time of compression molding;
Fig. 5 is a fragmentary cross-sectional view schematically illustrating an example of the step for forming the toe cap of the present invention, depicting a state after compression molding;
Fig. 6 is a perspective view schematically illustrating one example of the toe cap for a safety shoe according to the present invention;
Fig. 7 is a cross-sectional view taken along the line VII-VII in Fig. 6;
Fig. 8 is a graph showing the compression loads on the toe caps prepared in Example and Comparative Example; and
Fig. 9 is a schematic view showing the sampling positions in the toe caps prepared in Example and Comparative Example viewed from the back side.

### DETAILED DESCRIPTION OF THE PREFERRED EMBODIMENTS

A toe cap for a safety shoe according to the present invention is made of a long fiber-reinforced thermoplastic resin. In a preferred method of producing the toe cap, the fundamental characteristic feature comprises placing a fibrous pellet material of a long fiber-reinforced thermoplastic resin in a pseudo-forming mold, compressing the fibrous pellet material therein under application of heat to primarily form a pseudo-toe cap, setting the resultant pseudo-toe cap in position in a mold for forming a toe cap for a safety shoe, and applying pressure and heat to the pseudo-toe cap to compression mold the toe cap for a safety shoe.

Specifically, the first characteristic feature of the method for the production of the toe cap according to the present invention resides in the fact that the fibrous pellet material of long fiber-reinforced thermoplastic resin is used as a material which accounts for a great part of the cost of production of the toe cap, instead of an expensive sheet material heretofore used.

The use of the fibrous pellet material of long fiber-reinforced thermoplastic resin makes it possible to obviate the sheet cutting step and weight adjustment of a sheet with a sheet piece in the conventional sheet forming technique and establish automatization of weighing of the material.

The second characteristic feature resides in the fact that, unlike the melting and softening of a conventional sheet material in the plasticization of the material, the pseudo-toe cap which has better charging property in a main mold is primarily formed by using a pellet material and then secondarily formed into the toe cap. This method permits remarkable improvement in moldability.

In the conventional method, the plasticization of the sheet material is generally effected by using an apparatus of a far infrared system, which boosts the production cost and takes much time for the plasticization of the material. On the contrary, since the fibrous pellet material of long fiber-reinforced thermoplastic resin is thin and has good thermal conductivity, it is possible to plasticize it in a short time. Accordingly, the pseudo-toe cap can be primarily formed in a short time. Further, it is possible to realize automatization and mechanization of charging and weight adjustment of the material with correct control and reduce the deflashing step in the secondary processing.

When the fibrous pellet material of long fiber-reinforced thermoplastic resin is used for producing the toe cap as mentioned above, the formed article will not assume an impaired appearance or suffer from decline or unevenness of strength because it exhibits good flowability during the course of molding. Further, it is possible to produce the toe cap for a safety shoe which retains uniform high strength after the molding owing to a high content of reinforcing fibers in the skirt part too, enjoys light weight, and endures the compression load specified in JIS (Japanese Industrial Standard) T8101, safety shoes made of leather, class S and class L as well.

Now, the present invention will be described in detail below with reference to the accompanying drawings.

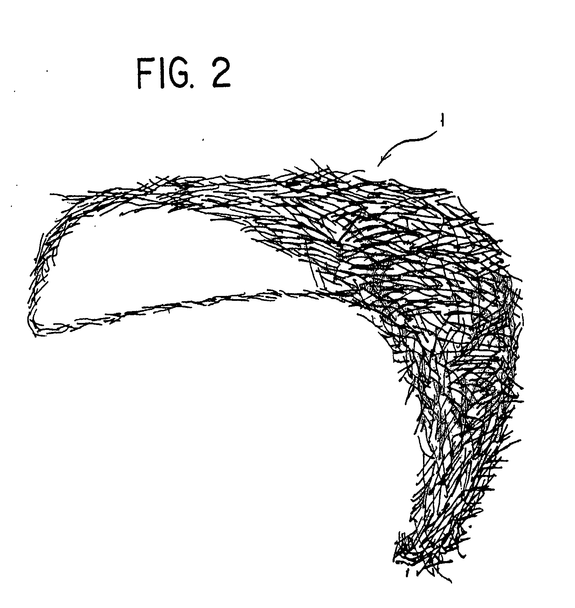

In the production of the toe cap for a safety shoe according to the present invention, first a fibrous pellet material of a long fiber-reinforced thermoplastic resin as described hereinafter is automatically weighed, placed in a pseudo-toe cap forming mold 11a as shown in Fig. 3, heated to a melting and softening temperature of the resin, preferably about 190 to 270°C, under a shape retaining pressure of 0.5 to 10 kg/cm² to mold a pseudo-toe cap 1 as shown in Fig. 2 (the shape having no skirt part and the state of a plenty of pellets partially joined to each other). As a heating source, a heated air, a heater, etc. may be used. The molding may be performed by a low-pressure pressing machine provided with a convenient mold. If the shape retaining pressure increases to such a high pressure as exceeding 10 kg/cm², the reinforcing fibers in the pellet tend to be broken.

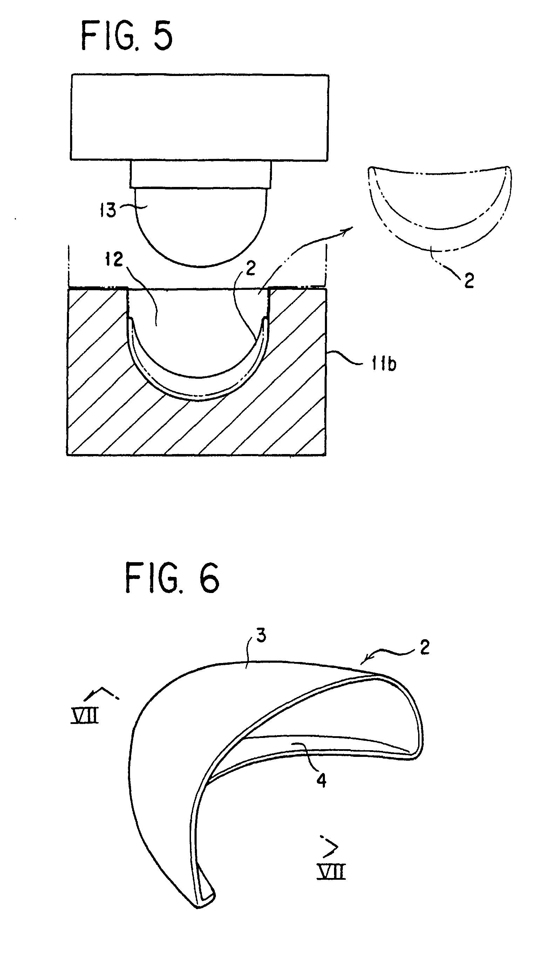

Then, the resultant pseudo-toe cap 1 is placed in a cavity 12 of a forming mold 11b as shown in Fig. 4 and Fig. 5, the compression molding of a toe cap 2 is effected by applying pressure and heat to the pseudo-toe cap by lowering a core 13 as shown in Fig. 4, and the toe cap 2 formed is extracted from the mold by means of an ejector 15 as shown in Fig. 5. Since the application of pressure of about 300 to 800 kg/cm² is sufficient in this step, the present invention permits a considerable reduction in pressure in comparison with the conventional forming pressure of 1,200 kg/cm². A suitable mold temperature is in the range of 70 to 160°C. Thereafter, such fabrication as deflashing is performed, as occasion demands, to obtain the toe cap. Incidentally, it is preferable that the forming mold should have at least one inclined cavity side surface because such a mold tends to decrease the occurrence of flash.

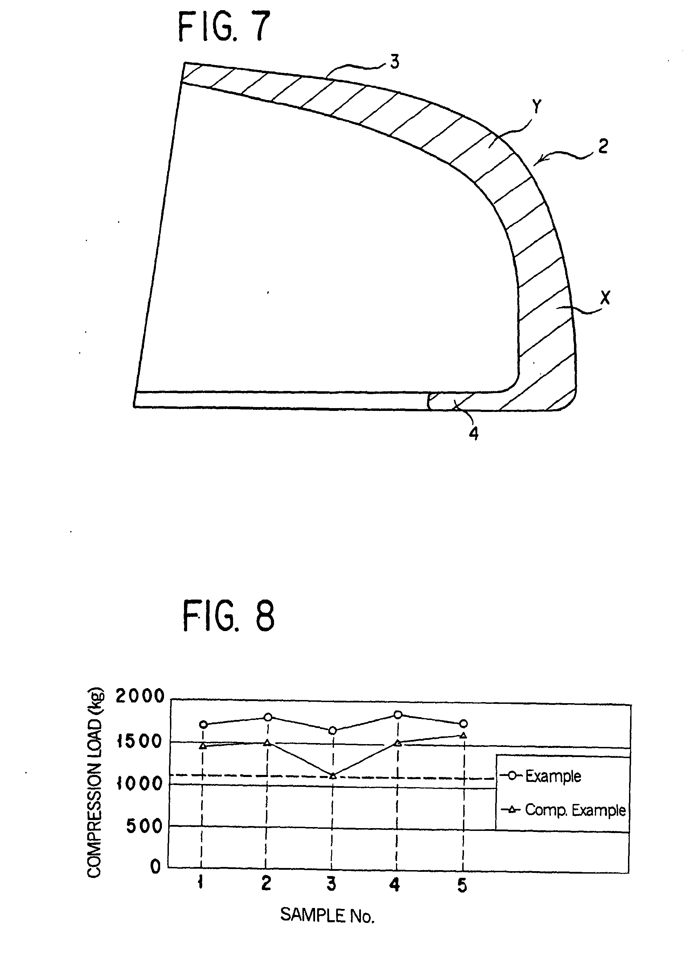

Fig. 6 and Fig. 7 represent one example of the toe cap for a safety shoe formed by using the fibrous pellet material of long fiber-reinforced thermoplastic resin of the present invention. The toe cap 2 has a domed shape conforming to the toe part of a safety shoe which is destined to cover the toes of the user's foot. The toe cap 2 has an inwardly bent skirt part 4 integrally formed along the lower edge of a domed part 3 thereof. An upstanding portion "X" and a curved portion "Y" of the toe cap have substantially the same wall thickness in the range of 2 to 6 mm, but gradually decreased slightly in the direction from the upstanding portion "X" to a leading end. It is desirable that the wall thickness of the leading end of the toe cap be in the range of 3.5 to 6 mm. The wall thickness of the leading end less than 3.5 mm will result in insufficient strength. Conversely, the thickness exceeding 6 mm is not desirable because the resultant toe cap becomes heavy. By forming the upstanding portion "X" and the curved portion "Y" of the toe cap 2 so as to have substantially the same wall thickness, the curved portions of the convex part and the concave part become analogous, which permits easy modeling, drawing and designing.

The fibrous pellet of long fiber-reinforced thermoplastic resin to be used in the present invention is obtained by impregnating a bundle of continuous reinforcing fibers with a thermoplastic resin and cutting it into a predetermined length. Preferably, the fibrous pellet contains as the continuous reinforcing fibers mentioned above a plurality of reinforcing fiber strands each comprising not more than 1,200 continuous fibers bundled, each continuous fiber having a diameter in the range of 6 to 25 µm.

Although the thermoplastic resin to be used in the fibrous pellet of long fiber-reinforced thermoplastic resin is not limited to a particular one, polyethylene, polypropylene, nylon, polyetylene terephthalate, polybutylene terephthalate, polystylene, acrylonitrile-styrene (AS) resin, acrylonitrile-butadiene-styrene (ABS) resin, polyphenylene sulfide (PPS), polyether imide (PEI), polyether ether ketone (PEEK), for example, may be advantageously used. The thermoplastic resin may contain therein, as occasion demands, any known additives such as a coloring agent, a modifier, and filler other than glass fiber. The thermoplastic resin is used after kneading with such an additive according to the conventional manner.

As the continuous reinforcing fibers, a plurality of reinforcing fiber strands, particularly glass fiber strands are used. Each strand comprises not more than 1,200 continuous fibers bundled and each continuous fiber has a diameter in the range of 6 to 25 µm.

The diameter of the fiber less than 6 µm is not practical because the productivity of the reinforcing fibers becomes low with the result of a high production cost. Conversely, if the diameter of the fiber exceeds 25 µm, the reinforcing fiber acquires increased rigidity and thus becomes brittle. As a result, the fibers tend to be broken due to friction between the mold and the reinforcing fiber or between the reinforcing fibers themselves during passing through a mold for resin impregnation in an apparatus for production of the fibrous pellet of long fiber-reinforced thermoplastic resin and thus fuzz will occur in the production apparatus and exert an adverse effect on the productivity.

Further, if the number of glass fibers bundled per one reinforcing fiber strand exceeds 1200, it will take much time for the penetration of resin into the reinforcing fiber strand and the impregnation with the resin will be poor. Conversely, if an attempt is made to effect the impregnation with the resin sufficiently, it is necessary to keep the contacting time with the resin in the mold for impregnation longer, which in turn remarkedly decreases the productivity. Moreover, it requires the use of a long mold for impregnation and a long heating time of resin, which inevitably tends to induce the heat deterioration of the resin and exert an adverse effect on the appearance, particularly color tone, of the final formed article. It is desirable that the number of fibers bundled per one reinforcing fiber strand be 100 to 1,000, more preferably 200 to 800.

The number of reinforcing fiber strands to be contained in one fibrous pellet may be properly selected depending on the size of the mold for impregnation, more specifically the diameter of the pellet. In general, the number is preferred to be in the range of 2 to 40, more preferably in the range of 7 to 35. If the number of reinforcing fiber strands is less than two, the pellet diameter inevitably becomes small in relation to the compounding ratio of the resin, which will lower the production efficiency. Conversely, if the number exceeds 40, the adhesion of the strands to each other becomes insufficient so as to cause gaps between strands and such defects as voids are liable to give rise in the final formed article.

The content of the continuous reinforcing fibers in the fibrous pellet of long fiber-reinforced thermoplastic resin is preferred to be in the range of 30 to 60% by volume. In the case of the toe cap which satisfies the compression load specified in JIS T8101, safety shoes made of leather, class S, the content in the range of 40 to 60% by volume is particularly preferable. The content of the continuous reinforcing fibers less than 30% by volume is insufficient as the content of reinforcing fibers in a master pellet to be used for molding. Conversely, if the content exceeds 60% by volume, the amount of resin relative to the amount of reinforcing fibers is unduly low and the bundle of reinforcing fibers will not be impregnated with the resin satisfactorily.

The fibrous pellets of long fiber-reinforced thermoplastic resin are obtained by, for example, passing the reinforcing fiber strands drawn from a plurality of rovings into a preheating oven, introducing them into a mold for resin impregnation, feeding a molten resin heated and kneaded in an extruder into this mold for resin impregnation, impregnating the the reinforcing fiber strands with a thermoplastic resin in the mold, cooling the strands, and then cutting the strands into a prescribed length by a pelletizer. Although the diameter and length of the pellet is not limited to the particular ones, in terms of the automatic weighing and plasticization thereof, the diameter is proper to be in the range of 0.2 to 5 mm and the length is proper to be in the range of 7 to 55 mm. The diameter less than 0.2 mm is not preferable because the pellet itself is too light so as to realize the automatic weighing only with difficulty. Conversely, if the diameter exceeds 5 mm, there needs much time for plasticization.

The fibrous pellet of long fiber-reinforced thermoplastic resin obtained by the method as described above contains a plurality of reinforcing fiber strands arrayed in parallel with each other in the longitudinal direction and integrally covered with the thermoplastic resin. This thermoplastic resin uniformly infiltrates into individual gaps between the fibers of the reinforcing fiber strand and the individual reinforcing fibers have the surface wetted very uniformly with the thermoplastic resin. For that reason, the good interfacial adhesion between the resin and the reinforcing fibers and the uniform distribution of the reinforcing fibers are attained in the formed article obtained by subsequent compression molding. As a result, the present invention permits manufacture of a toe cap for a safety shoe having a uniform distribution of reinforcing fibers into the leading end of the skirt part and exhibiting sufficient strength and a good appearance.

Now, some examples in which the toe caps for the safety shoe have been prepared by using the fibrous pellets of long fiber-reinforced thermoplastic resin of the present invention and which have confirmed the physical properties including strength and other attributes manifested by the resultant toe caps will be cited below by way of illustration.

### Example

Fibrous pellets of long fiber-reinforced thermoplastic resin (containing 50% by volume of glass fibers in polypropylene) of diameter about 0.5 mm cut into length of 20 mm were weighed and primarily formed by plasticizing the pellets in a pseudo-forming mold by heating (for 0.5 minutes under pressure of 0.5 kg/cm² and temperature of 210°C) to prepare a pseudo-toe cap having a curved portion. Then, the resultant pseudo-toe cap was placed in a toe cap forming mold (main mold) and compression molded at 135°C under pressure of 400 kg/cm² to produce the toe cap.

### Comparative Example

By using a trapezoidal sheet material of 3.3 mm thickness made of a glass fiber-reinforced thermoplastic resin containing 46% by volume of glass fibers 20 mm in length in polypropylene, a toe cap was prepared by the conventional sheet forming technique (melt softening: for three minutes at about 350°C, compression molding: 1,200 kg/cm², 120°C).

In Example mentioned above, the charging time into the main mold was about 1 to 2 seconds and the defective ratio was not more than 2%. On the other hand, in the case of the sheet forming method in Comparative Example, the charging time into the main mold was about 4 to 6 seconds and the defective ratio was 4 to 8%.

Then, the toe caps formed as mentioned above were tested for the compression load when the gap height at a toe tip is depressed to 22 mm in accordance with the method specified in JIS T8101 for safety shoes made of leather, class S (the criterion specified in JIS is 1,020 kg). The results of this test are shown in Table 1 and Fig. 8.

**Table 1**

| Sample No. | Example | Comparative Example |
|---|---|---|
| 1 | 1,700 | 1,460 |
| 2 | 1,800 | 1,500 |
| 3 | 1,650 | 1,140 |
| 4 | 1,850 | 1,530 |
| 5 | 1,750 | 1,620 |
| Maximum | 1,850 | 1,620 |
| Minimum | 1,650 | 1,140 |
| Average | 1,750 | 1,450 |

As being clear from the results shown in Table 1 and Fig. 8, the toe caps obtained in Comparative Example showed lower and evidently scattered strength. On the other hand, the toe caps obtained by the method of the present invention exhibited stably high compression load without scattering.

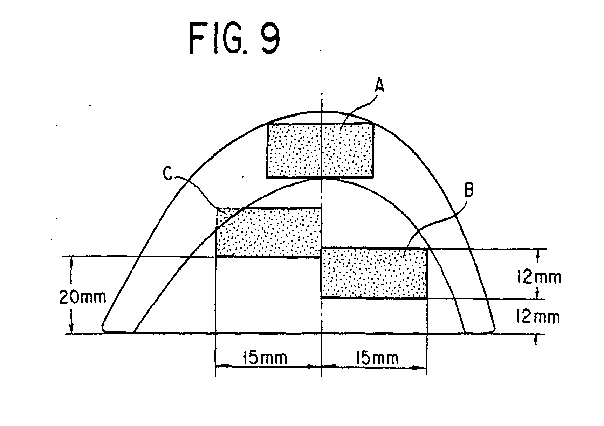

Then, some samples were taken from the formed toe cap at sampling positions shown in Fig. 9 and the distribution of reinforcing fibers were investigated.

As a result, in the toe caps obtained by the method of the present invention, the glass fiber content were 50% by volume at every positions, A, B, and C and showed no discernible change.

On the other hand, the toe cap obtained in Comparative Example showed change in the glass fiber (GF) content at every positions, A, B, and C. The results are shown in Table 2. Incidentally, the scattering of the distribution of reinforcing fibers in the molded article is a significant factor of the scattering or decrease of the compression load.

**Table 2**

| Sampling position | Sample size (mm) | GF content before molding | Sampling position | GF content after molding |
|---|---|---|---|---|
| A | 12x5x1.8-2.3t | 46 vol.% | Center portion in a skirt part | 28 vol.% |
| B | 12x5x3.1t | 46 vol.% | Original material part in molding | 41 vol.% |
| C | 12x5x4.5t | 46 vol.% | Overlapping part of sheet piece and original material | 50 vol.% |

## Claims

1. A toe cap (2) mode from a molten mass of a long fiber-reinforced thermoplastic base material for a safety shoe, **characterized in that** the toe cap (2) is formed from a pseudo-toe cap (1) having a curved portion, and that the proportion of the content of reinforcing fibers in a skirt part (4) to that in a main body part (3) is in the range of 70 to 100%.

2. The toe cap according to claim 1, wherein said toe cap (2) has a wall thickness in the.range of 2 to 6 mm.

3. The toe cap according to claim 1 or 2, wherein a leading end of said toe cap (3) has a wall thickness in the range of 3.5 to 6 mm.

4. The toe cap according to any one of claims 1 to 3, wherein said reinforcing fiber is glass fiber and its content is in the range of 30 to 60% by volume in said main body part (3) and 21 to 60% by volume in said skirt part (4).

5. The toe cap according to any one of claims 1 to 4, wherein the proportion of the content of reinforcing fibers in said skirt part (4) to that in said main body part (3) is in the range of 80 to 100%.

6. A method for the production of a toe cap (2) for a safety shoe, **characterized by** comprising placing a fibrous pellet material of a long fiber-reinforced thermoplastic resin in a pseudo-forming mold (11a), compressing said fibrous pellet material therein under application of heat to primarily form a pseudo-toe cap (1) having a curved portion, setting the resultant pseudo-toe cap (1) in position in a mold (11b) for forming a toe cap for a safety shoe, and applying pressure and heat to said pseudo-toe cap (1) to compression mold a toe cap (2) for a safety shoe.

7. The method according to claim 6, wherein said primary forming of the pseudo-toe cap (1) in the pseudo-forming mold (11a) is performed by application of pressure of 0.5 to 10 kg/cm² and a temperature of 190 to 270°C and said compression molding in the mold (11b) for forming a toe cap (3) for a safety shoe is performed by application of pressure of 300 to 800 kg/cm³ and a temperature of 70 to 160°C.

8. The method according to any one of claims 6 or 7, wherein said fibrous pellet material of long fiber-reinforced thermoplastic resin has a diameter in the range of 0.2 to 5 mm and a length in the range of 7 to 55 mm.

9. The method according to any one of claims 6 to 8, wherein said reinforcing fiber contained in said fibrous pellet material of long fiber-reinforced thermoplastic resin is glass fiber and its content is in the range of 30 to 60% by volume.

## Patentansprüche

1. Zehenkappe (2), gefertigt aus einer Schmelzmasse aus einem langfaserverstärkten thermoplastischen Grundmaterial für einen Sicherheitsschuh, **dadurch gekennzeichnet, dass** die Zehenkappe (2) aus einer Pseudozehenkappe (1) geformt ist, die einen gekrümmten Abschnitt aufweist, und dass der Anteil vom Verstärkungsfaserngehalt in einem Randteil (4) zu jenem in einem Hauptkörperteil (3) im Bereich von 70 bis 100% liegt.

2. Zehenkappe nach Anspruch 1, wobei die Zehenkappe (2) eine Wanddicke im Bereich von 2 bis 6 mm aufweist.

3. Zehenkappe nach Anspruch 1 oder 2, wobei ein vorderes Ende der Zehenkappe (2) eine Wanddicke im Bereich von 3.5 bis 6 mm aufweist.

4. Zehenkappe nach einem der Ansprüche 1 bis 3, wobei die Verstärkungsfaser Glasfaser ist und ihr Gehalt im Bereich von 30 bis 60 Vol.-% im Hauptkörperteil (3) und von 21 bis 60 Vol.-% im Randteil (4) liegt.

5. Zehenkappe nach einem der Ansprüche 1 bis 4, wobei der Anteil vom Verstärkungsfaserngehalt im Randteil (4) zu jenem im Hauptkörperteil (3) im Bereich von 80 bis 100% liegt.

6. Verfahren zur Herstellung einer Zehenkappe (2) für einen Sicherheitsschuh, **gekennzeichnet durch** Umfassen des Platzierens eines faserigen Pelletmaterials aus einem langfaserverstärkten Thermoplastharz in einer pseudoformgebenden Form (11a), des Komprimierens des faserigen Pelletmaterials in derselben unter Beaufschlagung mit Wärme, um primär eine Pseudozehenkappe (1) mit einem gekrümmten Abschnitt zu formen, des In-Position-Bringes der entstandenen Pseudozehenkappe (1) in einer Form (11b) zum Formen einer Zehenkappe für einen Sicherheitsschuh, und des Beaufschlagens der Pseudozehenkappe (1) mit Druck und Wärme, um eine Zehenkappe (2) für einen Sicherheitsschuh **durch** Kompression zu formen.

7. Verfahren nach Anspruch 6, wobei das primäre Formen der Pseudozehenkappe (1) in der pseudoformgebenden Form (11a) durch Beaufschlagung mit einem Druck von 0.5 bis 10 kg/cm² und einer Temperatur von 190 bis 270 °C durchgeführt wird und das Kompressionsformen in der Form (11b) zum Formen einer Zehenkappe (2) für einen Sicherheitsschuh durch Beaufschlagung mit einem Druck von 300 bis 800 kg/cm² und einer Temperatur von 70 bis 160 °C durchgeführt wird.

8. Verfahren nach Anspruch 6 oder 7, wobei das faserige Pelletmaterial aus langfaserverstärktem Thermoplastharz einen Durchmesser im Bereich von 0.2 bis 5 mm und eine Länge im Bereich von 7 bis 55 mm besitzt.

9. Verfahren nach einem der Ansprüche 6 bis 8, wobei die im faserigen Pelletmaterial aus langfaserverstärktem Thermoplastharz enthaltene Verstärkungsfaser Glasfaser ist und ihr Gehalt im Bereich von 30 bis 60 Vol.-% liegt.

## Revendications

1. Embout protège-orteils (2), fabriqué à partir d'une masse fondue de matière de base thermoplastique renforcée par de longues fibres, pour chaussure de sécurité, **caractérisé en ce que** ledit embout protège-orteils (2) est formé à partir d'une ébauche (1) d'embout protège-orteils présentant une partie incurvée, et **en ce que** la proportion de la quantité de fibres de renfort contenue dans la jupe (4), rapportée à celle contenue dans le corps principal (3), vaut de 70 à 100 %.

2. Embout protège-orteils conforme à la revendication 1, lequel embout protège-orteils (2) présente une épaisseur de paroi de 2 à 6 mm.

3. Embout protège-orteils conforme à la revendication 1 ou 2, duquel embout protège-orteils (2) l'extrémité avant présente une épaisseur de paroi de 3,5 à 6 mm.

4. Embout protège-orteils conforme à l'une des revendications 1 à 3, dans lequel lesdites fibres de renfort sont des fibres de verre qui se trouvent en une proportion de 30 à 60 % en volume dans ledit corps principal (3) et en une proportion de 21 à 60 % en volume dans ladite jupe (4).

5. Embout protège-orteils conforme à l'une des revendications 1 à 4, dans lequel la proportion de la quantité de fibres de renfort contenue dans la jupe (4), rapportée à celle contenue dans le corps principal (3), vaut de 80 à 100 %.

6. Procédé de fabrication d'un embout protège-orteils (2) pour chaussure de sécurité, **caractérisé en ce qu'**il comporte le fait de placer, dans un moule (11a) de façonnage d'ébauche d'embout, un morceau de matière fibreuse en résine thermoplastique renforcée par de longues fibres, le fait de comprimer ledit morceau de matière fibreuse dans le moule, tout en le chauffant, pour en faire d'abord une ébauche (1) d'embout protège-orteils dotée d'une partie incurvée, le fait de fixer l'ébauche (1) d'embout protège-orteils résultante en position dans un moule (11b) de façonnage d'embout protège-orteils (2) pour chaussure de sécurité, et le fait de soumettre à pression et de chauffer ladite ébauche (1) d'embout protège-orteils pour en faire, par moulage par compression, un embout protège-orteils (2) pour chaussure de sécurité.

7. Procédé conforme à la revendication 6, dans lequel on réalise le façonnage primaire de l'ébauche (1) d'embout protège-orteils dans le moule (11a) de façonnage d'ébauche d'embout par application d'une pression de 0,5 à 10 kg/cm² et chauffage à une température de 190 à 270 °C, et l'on réalise ledit moulage par compression de l'ébauche dans le moule (11b), pour en faire un embout protège-orteils (2) pour chaussure de sécurité, par application d'une pression de 300 à 800 kg/cm² et chauffage à une température de 70 à 160 °C.

8. Procédé conforme à l'une des revendications 6 ou 7, dans lequel ledit morceau de matière fibreuse en résine thermoplastique renforcée par de longues fibres a de 0,2 à 5 mm de diamètre et de 7 à 55 mm de long.

9. Procédé conforme à l'une des revendications 6 à 8, dans lequel lesdites fibres de renfort contenues dans ledit morceau de matière fibreuse en résine thermoplastique renforcée par de longues fibres sont des fibres de verre qui se trouvent présentes en une proportion de 30 à 60 % en volume.
